# EUROPÄISCHE PATENTANMELDUNG

(11) **EP 1 030 175 A1**
(43) Veröffentlichungstag der Anmeldung: **23.08.2000**
(21) Anmeldenummer: 99103322.6
(22) Anmeldetag: 19.02.1999
(51) Int. Cl.: G01N 27/401

(54) **Elektrochemische Elektrodenanordnung**

(71) Anmelder: Hamilton Bonaduz AG, CH-7402 Bonaduz (CH)
(72) Erfinder: Sovrano, Fabio, 8872 Weesen (CH)
(74) Vertreter: Prechtel, Jörg, Dipl.-Phys. Dr.

(57) **Zusammenfassung**

Eine elektrochemische Elektrodenanordnung umfaßt ein Gehäuserohr (14) zur Aufnahme eines Elektrolyten, einen durch ein Rohrende (20) in das Gehäuserohr (14) eingesteckten, insbesondere ebenfalls rohrförmigen Innenkörper (18) und ein bezogen auf die Rohrachse (16) des Gehäuserohrs (14) radial zwischen dem Gehäuserohr (14) und dem Innenkörper (18) gebildetes Diaphragma (36), welches einen elektrolytischen Kontakt zwischen dem Elektrolyten und einem Außenmedium herstellt. Erfindungsgemäß liegt der Innenkörper (18) mit seinem Außenmantel (38) in einem Verbindungsbereich ringsum im Festsitz am Innenmantel (40) des Gehäuserohrs (14) an, wobei zur Bildung des Diaphragmas (36) der Innenkörper (18) zumindest in dem Verbindungsbereich an seinem Außenmantel (38) aufgerauht ist. Dies ermöglicht die Herstellung von Diaphragmen (Flüssigkeitsverbindungen) mit sehr genau reproduzierbaren Eigenschaften.

## Beschreibung

Die Erfindung betrifft eine elektrochemische Elektrodenanordnung, umfassend ein Gehäuserohr zur Aufnahme eines Elektrolyten, einen durch ein Rohrende in das Gehäuserohr eingesteckten, insbesondere ebenfalls rohrförmigen Innenkörper und ein bezogen auf die Rohrachse des Gehäuserohrs radial zwischen dem Gehäuserohr und dem Innenkörper gebildetes Diaphragma, welches einen elektrolytischen Kontakt zwischen dem Elektrolyten und einem Außenmedium herstellt.

Der in dem Gehäuserohr enthaltene Elektrolyt bildet zusammen mit einem darin eingetauchten elektronenleitenden Werkstoff, der eigentlichen Elektrode, eine Halbzelle. Beispiele für Halbzellen sind Kalomel-Halbzellen, ionenselektive Elektroden oder Glaselektroden. Das Diaphragma bildet eine porige Scheidewand zwischen dem Elektrolyten und dem Außenmedium. In der Fachterminologie wird es auch als Flüssigkeitsverbindung oder "Liquid Junction" bezeichnet, gelegentlich auch als Membran.

An dem Diaphragma findet ein Stoffaustausch statt. Bei unterschiedlichen Stoffkonzentrationen des Elektrolyten und des Außenmediums entstehen Diffusionsvorgänge, die den Ausgleich der Stoffkonzentrationen zum Ziel haben. Sofern unterschiedliche Drücke auf beiden Seiten des Diaphragmas herrschen, tritt ein konvektiver Stofftransport auf. Eine dritte Art des Stofftransports ist die Migration. Diese tritt auf, wenn die elektrischen Potentiale auf beiden Seiten des Diaphragmas unterschiedlich sind. Bei Migration werden nur elektrisch geladene Teilchen durch das Diaphragma hindurch transportiert.

In Kombinationselektroden, bei denen zwei oder mehr Halbzellen zu einer elektrolytischen Zelle kombiniert sind, wird eine der Halbzellen oftmals als Bezugs- oder Referenzelektrode verwendet, deren definiertes und konstantes Gleichgewichtspotential die Messung anderer Elektrodenpotentiale erlaubt. Die Lebens- oder Einsatzdauer einer Referenzelektrode wird durch den diffusiven und konvektiven Stofftransport bestimmt. Diese beiden Parameter werden in einfacher Weise durch den Wechselstromwiderstand der Flüssigkeitsverbindung (diffusiver Transport) und den Durchfluß (konvektiver Transport) bei gegebenen Randbedingungen beschrieben. Der Wechselstromwiderstand wird meist in einer 3-molaren Kaliumchlorid-Lösung bei 25°C gemessen. Der Durchfluß wird in der Regel in Milliliter pro Tag bei 25°C und einem Druckunterschied von 1 bar angegeben.

Es sind elektrochemische Referenzelektroden bekannt, bei denen ein das Diaphragma bildender poröser Keramikstopfen in ein Glasrohr eingeschmolzen wird. Um eine dichte Einschmelzung des Stopfens zu gewährleisten, wird er vorher verglast. Das Einschmelzen des verglasten Stopfens ist schwierig und verlangt hohes glasbläserisches Können. Der Keramikstopfen muß einen optimalen thermischen Ausdehnungskoeffizienten besitzen, da sonst Sprünge im Glasrohr entstehen können.

Eine weitere bekannte Ausbildung eines Diaphragmas ist das sogenannte Schliffdiaphragma. Es wird durch eine dünne Flüssigkeitsschicht zwischen zwei Schliffflächen gebildet, von denen eine meist an einer beweglichen Hülse ausgebildet ist, deren Beweglichkeit eine Reinigung des Diaphragmas erlaubt. Eine einfache Herstellung ist dabei in der Regel nur möglich, wenn eine Schliffhülse aus Kunststoff verwendet wird. Wenn jedoch sowohl die Schliffhülse als auch der andere Schliffkörper, der als Innenkörper in die Hülse eingesetzt wird, aus Glas gefertigt werden, ist das so entstehende Glas/Glas-Schliffdiaphragma häufig nicht mehr lösbar. Bei beiden Bauformen des Schliffdiaphragmas sind der Durchfluß und der Wechselstromwiderstand nur wenig reproduzierbar.

Alternativ ist es bekannt, zur Bildung des Diaphragmas verzwirnte Platindrähte, Quarzfasern, Asbestfasern oder organische Fasern, insbesondere Kunststoffasern, zwischen einer äußeren und einer inneren Wand einzuklemmen. Problematisch an derartigen Diaphragmen ist aber, daß der Durchfluß wenig produzierbar ist. Beispielhaft wird auf die US-A-4,255,244 verwiesen, bei der ein Kapillarmaterial zwischen zwei Schrumpfschläuche eingesetzt wird, die ihrerseits auf ein Innenrohr aufgeschrumpft werden. Das Ganze wird anschließend in ein Außenrohr eingepaßt. Neben der geringen Reproduzierbarkeit der physikalischen Eigenschaften des Diaphragmas fällt hier auch der hohe apparative Aufwand zur Herstellung nachteilig ins Gewicht.

Aus der US-A-4,218,299 ist es bekannt, zur Bildung eines Diaphragmas eine Keramikmasse auf ein Innenrohr aufzuschmelzen. Zur Abdichtung der so entstehenden porösen Keramikschicht gegenüber einem Außenrohr dient ein O-Ring, der zwischen die Keramikschicht und das Außenrohr eingesetzt wird. Problematisch an dieser Lösung ist, daß das Diaphragma keine hohe Beständigkeit gegenüber Druck- und Temperaturwechseln bietet, da sich der O-Ring verschieben kann. Zudem sind die Durchflußverhältnisse der porösen Keramikschicht nicht exakt reproduzierbar. Schließlich muß mit Memory-Effekten gerechnet werden, da der Spalt zwischen O-Ring und Keramikschicht nur schwer zu Reinigungszwecken zugänglich ist.

Bekannt ist außerdem noch eine Lösung, bei der das Diaphragma von einer porösen Keramikschicht zwischen einem Innenrohr und einem Außenrohr gebildet ist. Auf das Innenrohr wird eine Keramikmasse gestrichen, aus der durch Einbrennen bei einer geeigneten Temperatur die poröse Keramikschicht entsteht. Das Außenrohr aus Glas wird anschließend auf die Keramikschicht aufgeschmolzen. Die Keramikschicht bring wiederum den Nachteil mit sich, daß ihre Dicke und ihre Porösität nur schlecht in engen Grenzen einstellbar sind, weshalb der Wechselstromwiderstand und der Durchfluß des Diaphragmas nicht exakt reproduzierbar sind.

Aufgabe der Erfindung ist es daher, für eine elektrochemische Elektrodenanordnung der eingangs bezeichneten Art einen Weg aufzuzeigen, wie das Diaphragma mit geringem Aufwand und einer hohen Reproduzierbarkeit seiner physikalischen Parameter, insbesondere des Wechselstromwiderstands und des Durchflusses, hergestellt werden kann.

Zur Lösung dieser Aufgabe ist erfindungsgemäß vorgesehen, daß der Innenkörper mit seinem Außenmantel in einem Verbindungsbereich ringsum im Festsitz am Innenmantel des Gehäuserohrs anliegt und daß zur Bildung des Diaphragmas der Innenkörper zumindest in dem Verbindungsbereich an seinem Außenmantel aufgerauht ist.

Über die Rauheit des Innenkörpers kann Einfluß auf den Wechselstromwiderstand und den Durchfluß des Diaphragmas genommen werden. Es hat sich gezeigt, daß durch geeignete Wahl der Rauheit gewünschte Widerstands- und Durchflußverhältnisse einstellbar sind und dies mit einer hohen Reproduzierbarkeit. Dies hängt damit zusammen, daß mit vergleichsweise geringem Aufwand auch die Rauheit des Innenkörpers jederzeit in engen Grenzen reproduzierbar ist. Im Vergleich zu bekannten Lösungen ist der Fertigungsaufwand gering, da lediglich der Innenkörper einer Aufrauhungsbehandlung unterzogen und anschließend in das Gehäuserohr eingepaßt werden muß, jedoch keine zusätzlichen Komponenten zwischen Innenkörper und Gehäuserohr eingesetzt oder auf den Innenkörper aufgeschmolzen oder aufgepreßt werden müssen. Die erfindungsgemäße Elektrodenanordnung ist so teil- oder vollautomatisch herstellbar.

Aus der EP 0 457 143 A1 ist es bereits bekannt, zwei Glaskörper, von denen einer aufgerauht ist, zur Bildung eines Diaphragmas ineinander zu pressen. Die spezielle Konstruktion der aus dieser Schrift bekannten Elektrodenanordnung erlaubt jedoch keine unmittelbare Übertragung des dortigen Aufrauhungsprinzips auf die erfindungsgemäße Elektrodenanordnung. Die Konstruktion der EP 0 457 143 A1 sieht nämlich vor, in die Seitenwand eines hohlen Elektrodenschafts aus Glas ein Loch mit einem Bohrer zu bohren, dessen Körnung eine gewünschte Oberflächenrauhheit der Lochwand bestimmt. In das Loch wird ein allseits geschlossener Hohlkörper aus Glas eingesteckt. Der Hohlkörper weist eine glatte Außenoberfläche auf. Durch Erwärmen des Hohlkörpers erweicht sein Glasmaterial und die in dem Hohlkörper eingeschlossene Luft dehnt sich aus. Der entstehende Überdruck im Hohlkörper bläht diesen auf und preßt ihn gegen die aufgerauhte Wand des Bohrlochs. Nachteilig ist dabei, daß diese Vorgehensweise kompliziert ist und ein hohes handwerkliches Geschick erfordert. Ferner ist das bündige Einpassen des Hohlkörpers in die Seitenwand des Elektrodenschafts schwierig. Eine Automatisierung des Herstellungsprozesses ist nur schwer vorstellbar.

Übertragbar ist das Aufrauhungsprinzip der EP 0 457 143 A1 auf die erfindungsgemäße Elektrodenanordnung deshalb nicht ohne weiteres, weil bei letzterer der Innenkörper von einem offenen Rohrende des Gehäuserohrs her axial in dieses eingesteckt wird und eine Bohrbearbeitung des Gehäuserohrs zur Aufrauhung des Rohrinnenmantels dann nicht möglich ist. Um das Gehäuserohr innen aufzurauhen, müßten andere Methoden herangezogen werden. Besonders wenn man die üblichen Dimensionen des Gehäuserohrs bedenkt, dessen Durchmesser oftmals nur einige Millimeter beträgt, wird klar, daß eine reproduzierbare Aufrauhung des Gehäuserohrs technisch außerordentlich schwierig wäre.

Die Erfindung rückt nun von der durch die EP 0 457 143 A1 manifestierten Vorstellung ab, den äußeren der beiden ineinander gefügten Körper aufzurauhen. Statt dessen sieht sie vor, den Innenkörper aufzurauhen. Dies ist technisch wesentlich leichter möglich und erlaubt eine Aufrauhung mit reproduzierbarer Qualität. Zudem ist bei der EP 0 457 143 A1 das Diaphragma in der Seitenwand des Elektrodenschafts angeordnet. Dieser Anbringungsort kann bei Anwesenheit von elektrischen Feldern im Außenmedium zu zusätzlichen Potentialen führen, die gleichbedeutend mit Meßfehlern sind. Die zum Gehäuserohr koaxiale Anordnung des Diaphragmas bei der Erfindung vermeidet dagegen derartige zusätzliche Potentiale.

Wenn hier von Festsitz die Rede ist, so ist damit jeder Sitz des Innenkörpers im Gehäuserohr gemeint, der zu einem sicheren Halt des Innenkörpers im Gebrauch der Elektrodenanordnung führt, der also verhindert, daß der Innenkörper manuell mit wenig Kraftaufwand aus dem Gehäuserohr herausgezogen werden kann.

Um den Festsitz des aufgerauhten Innenkörpers in dem Gehäuserohr herzustellen, könnte daran gedacht werden, wie in der EP 0 457 143 A1 den Innenkörper als allseits geschlossenen Hohlkörper auszuführen und ihn durch Erhitzung auszudehnen und in das Gehäuserohr einzupressen. Es bestünde dann aber die Gefahr, daß die Rohrwand des Gehäuserohrs aufgrund starker Scherbelastung bricht, wenn sich der Innenkörper temperatur-bedingt radial aufweitet. Dies gilt besonders für ein unflexibles Material wie Glas.

Um den Innenkörper dennoch in das Gehäuserohr einpassen zu können, sieht eine bevorzugte Weiterbildung der Erfindung vor, daß der Innenkörper in Richtung der Rohrachse des Gehäuserohrs in dem Verbindungsbereich und darüber hinaus zylindrisch ausgebildet ist und im wesentlichen zentrisch zur Rohrachse in das Gehäuserohr eingesteckt ist und daß die Rohrwand des Gehäuserohrs in dem Verbindungsbereich ringsum radial eingedrückt und auf den Innenkörper aufgedrückt ist. Das Gehäuserohr kann dabei in dem Verbindungsbereich zunächst mit radialem Übermaß gegenüber dem Innenkörper hergestellt werden. Dieses Übermaß kann durchaus einige Millimeter betragen. Durch Erwärmung wird das Material des Gehäuserohrs plastisch verformbar gemacht. Die Rohrwand des Gehäuserohrs kann dann unter Durchmesserreduzierung problemlos auf den Innenkörper aufgedrückt und der Festsitz des Innenkörpers im Gehäuserohr hergestellt werden. Dies läßt sich insbesondere maschinell bewerkstelligen, so daß durch automatisierte Fertigungsabläufe niedrige Fertigungskosten für die erfindungsgemäße Elektrodenanordnung möglich sind. Vorteilhaft bei dieser Art der Verbindung von Gehäuserohr und Innenkörper ist zudem, daß im Gehäuserohr keine Zugspannungen entstehen, wenn dessen erweichte Rohrwand auf den Innenkörper aufgedrückt wird. Dagegen bewirkt bei der EP 0 457 143 A1 die radiale Aufweitung des Innenkörpers, daß in dem Elektrodenschaft Zugspannungen entstehen, die zu Rissen im Glasmaterial führen können. Aufgrund der geringen Bruchgefahr läßt sich bei der erfindungsgemäßen Lösung somit eine hohe Produktionsausbeute erzielen.

Alternativ zur Erwärmung und Verformung des Gehäuserohrs ist es vorstellbar, letzteres im Verbindungsbereich bereits paßgenau zum Innenkörper herzustellen und diesen axial in das Gehäuserohr hineinzupressen. Dies ist insbesondere bei Materialien denkbar, die nicht in solchem Maße bruchgefährdet sind wie Glas.

Die axiale Länge des Diaphragmas läßt sich einfach durch die Breite der Ringzone einstellen, in der die Rohrwand des Gehäuserohrs auf den Innenkörper aufgedrückt wird. Zweckmäßigerweise reicht der Innenkörper bis zu einem Rohrende des Gehäuserohrs. Dort kann dessen Rohrwand besonders einfach auf den Innenkörper aufgedrückt werden. Das Rohrende des Gehäuserohrs bildet zudem eine definierte Grenze für das Diaphragma, was die präzise Einstellung einer gewünschten axilen Länge des Diaphragmas erleichtert. Auch ist es am Rohrende relativ leicht, ein sehr schmales Wandstück der Gehäuserohrwand definiert auf den Innenkörper aufzudrücken, um ein entsprechend kurzes Diaphragma zu bilden.

Der Grad der Rauheit des Innenkörpers wird von der konkreten Anwendung abhängen. Besonders gute Ergebnisse haben sich in der Praxis eingestellt, wenn der arithmetische Mittelwert Rₐ der Oberflächenrauheit des Innenkörpers im Bereich von dessen Aufrauhung weniger als 15 µm, vorzugsweise weniger als 10 µm und höchstvorzugsweise höchstens 5 µm beträgt. Um eine untere Grenze für den arithmetischen Mittelwert Rₐ der Oberflächenrauheit anzugeben, so wird empfohlen, daß dieser mehr als 0,01 µm, vorzugsweise mehr als 0,05 µm und höchstvorzugsweise wenigstens 0,1 µm beträgt.

Wenn der Bereich der Aufrauhung des Innenkörpers in Richtung der Rohrachse des Gehäuserohrs länger als der Verbindungsbereich ist, können Innenkörper mit einem standardisierten Aufrauhungsbereich gefertigt werden. Die axiale Länge des Diaphragmas kann dann individuell und anwendungsabhängig durch die Breite der Eindrückzone der Rohrwand des Gehäuserohrs eingestellt werden.

Ferner reicht der Bereich der Aufrauhung des Innenkörpers in Richtung der Rohrachse des Gehäuserohrs bevorzugt beidseits über den Verbindungsbereich hinaus. Diese Maßnahme stellt sicher, daß über die gesamte axiale Erstreckung des Diaphragmas gleichmäßige Rauheitsverhältnisse herrschen und nicht Teile der Gehäuserohrwand auf glatten Außenmantelbereichen des Innenkörpers zu liegen kommen. So wird die Funktionssicherheit des Diaphragmas gewährleistet.

Für die axiale Erstreckung der Aufrauhungszone des Innenkörpers hat sich ein Wert zwischen 1 und 30 mm, vorzugsweise zwischen 5 und 20 mm und höchstvorzugsweise zwischen 7 und 12 mm als geeignet erwiesen. Die axiale Länge des Verbindungsbereichs liegt günstigerweise zwischen 1 und 20 mm, vorzugsweise zwischen 1,5 und 15 mm und höchstvorzugsweise zwischen 2 und 6 mm.

Anhand der Rauhheit der Aufrauhungszone und der axialen Länge des Diaphragmas ist es möglich, den konvektiven Stofftransport über das Diaphragma in einem großen Bereich zu steuern. Dies ist wichtig bei einigen industriellen Elektrodenanordnungen, bei denen ein in dem Gehäuserohr enthaltener Referenzelektrolyt unter einem Überdruck von beispielsweise 2 bar steht. Hierdurch kann das Eindringen von Meßgut in die den Referenzelektrolyten aufnehmende Kammer verhindert werden.

Zweckmäßigerweise wird der Innenmantel des Gehäuserohrs im Verbindungsbereich glatt sein. Glatt heißt hierbei, daß der Innenmantel des Gehäuserohrs eine im Vergleich zu der aufgerauhten Zone des Innenkörpers wesentlich geringere Oberflächenrauheit besitzt, wobei klar ist, daß auch der Innenmantel des Gehäuserohrs im mikroskopischen Maßstab Unebenheiten aufweisen wird.

Bevorzugt bestehen der Innenkörper oder/und das Gehäuserohr aus einem Glasmaterial. Dennoch sind andere Materialien für den Innenkörper oder/und für das Gehäuserohr nicht ausgeschlossen. Denkbar sind insbesondere Kunststoffmaterialien, beispielsweise ein Epoxyharz.

Um infolge thermischer Einflüsse keine mechanischen Spannungen zwischen dem Innenkörper und dem Gehäuserohr hervorzurufen, werden der Innenkörper und das Gehäuserohr zweckmäßigerweise aus dem gleichen Werkstoff gefertigt sein, so daß sie ein gleiches Wärmeausdehnungsverhalten zeigen.

Bei einer bevorzugten Ausgestaltung umfaßt die erfindungsgemäße Elektrodenanordnung eine Referenzelektrode und eine Meßelektrode, die zu einer Einstabmeßkette kombiniert sind. Eine Einstabmeßkette ist aus zwei konzentrisch ineinander gesteckten Rohren aufgebaut, deren äußeres in der Regel als Gehäuse der Referenzelektrode und deren Inneres als Gehäuse der Meßelektrode dient. Das Innere Rohr bildet dann den Innenkörper der erfindungsgemäßen Elektrodenanordnung. Mit der Meßelektrode können potentiometrische oder amperometrische Messungen durchgeführt werden. Sie besitzt einen Meßkopf, der in Kontakt mit dem Außenmedium steht. Eine häufige Anwendung einer solchen Einstabmeßkette ist die Bestimmung des pH-Werts einer Testlösung. Die Meßelektrode kann insbesondere als Glaselektrode ausgeführt sein.

Die Erfindung betrifft ferner ein Verfahren zur Herstellung der Elektrodenanordnung der vorstehend beschriebenen Art. Dieses Verfahren ist dadurch gekennzeichnet, daß zum Verbinden des Gehäuserohrs mit dem Innenkörper das Gehäuserohr in dem Verbindungsbereich erwärmt wird und sodann seine erwärmte Rohrwand in dem Verbindungsbereich ringsum auf den aufgerauhten Bereich des in das Gehäuserohr eingesteckten Innenkörpers aufgedrückt wird. Das Material des Gehäuserohrs und die Erwärmungs-temperatur sollten so gewählt werden, daß das Gehäuserohr plastisch verformt werden kann und sein Material bei der gewählten Temperatur im wesentlichen kein thermisches Gedächtnis mehr besitzt, das die Verformung beim Erkalten wenigstens teilweise rückgängig machen und zur Spaltbildung zwischen Gehäuserohr und Innenkörper führen könnte. Zudem wird darauf geachtet werden müssen, daß beim Erkalten mechanische Spannungen im Material des Gehäuserohrs nur so wenig wie möglich auftreten, um Risse zu vermeiden. Dabei sind spezielle Abkühlstrategien denkbar, beispielsweise daß die benutzte Wärmequelle nicht abrupt abgeschaltet wird, sondern in ihrer Leistung nach und nach reduziert wird.

Von dem Hintergrund der vorstehenden Anforderungen hat es sich in der Praxis als günstig erwiesen, wenn das Gehäuserohr in dem Verbindungsbereich wenigstens annähernd auf Erweichungstemperatur erwärmt wird. Unter Erweichungstemperatur wird hier eine Temperatur verstanden, bei der ein Material zwar noch nicht in den Fließ- oder gar Schmelzzustand übergeht, jedoch beginnt, seine Stabilität zu verlieren und vergleichsweise mühelos verformbar zu werden, gewünschtenfalls auch beginnt, in sich zusammenzusinken. Es versteht sich, daß die Erweichungstemperatur keine scharf definierte Temperatur sein muß, sondern ein Bereich von Temperaturen sein kann, der für die Zwecke der Erfindung geeignet ist.

Sofern das Gehäuserohr aus einem Glasmaterial, insbesondere Bleiglas, gefertigt wird, empfiehlt sich eine Erwärmung des Gehäuserohrs in dem Verbindungsbereich auf eine Temperatur zwischen 550 und 850°C, vorzugsweise zwischen 630 und 720°C und höchstvorzugsweise zwischen 650 und 700°C. Es ist dann besonders gut verformbar und zeigt im wesentlichen kein thermisches Erinnerungsvermögen mehr. Auch erkaltungsbedingte mechanische Spannungen können in dieser Temperaturregion gering gehalten werden.

Um ein ringsum gleichmäßiges Diaphragma zu schaffen, sollten zum Aufdrücken des Gehäuserohrs auf den eingesteckten Innenkörper beide bezogen auf die Rohrachse relativ zueinander unverdrehbar fixiert und sodann beide gemeinsam um die Rohrachse gedreht werden, wobei ein stationär gehaltenes Andrückorgan von radial außen gegen die erwärmte Rohrwand des rotierenden Gehäuserohrs gedrückt wird. Für das Andrückorgan empfiehlt sich ein Material, an dem das erwärmte und weich gewordene Material des Gehäuserohrs nicht haften bleibt. Kohle und Graphit haben sich als geeignet erwiesen, insbesondere wenn das Gehäuserohr aus Glas gefertigt ist.

Die Kraft, mit der von außen auf die Rohrwand des Gehäuserohrs gedrückt wird, ist ohne weiteres exakt einstellbar und überprüfbar, so daß im Fertigungsprozeß stets gleiche Flächenpressungen zwischen Gehäuserohr und Innenkörper erhalten werden können. Das erfindungsgemäße Verfahren bietet demnach eine hohe Reproduzierbarkeit. Zudem ist der technische Aufwand, um das Gehäuserohr zu erwärmen und auf den Innenkörper aufzudrücken, ausgesprochen gering, weswegen das erfindungsgemäße Verfahren einer Automatisierung zugänglich ist.

Als günstig hat es sich in der Praxis erwiesen, wenn mit einer Kraft zwischen 0,5 und 50 N, vorzugsweise zwischen 0,5 und 20 N und höchstvorzugsweise zwischen 1 und 10 N auf die Rohrwand des Gehäuserohrs gedrückt wird. Dabei hat es sich als zweckmäßig erwiesen, wenn das Gehäuserohr und der Innenkörper mit einer Rotationsgeschwindigkeit zwischen 1 und 200 U/min, vorzugsweise zwischen 5 und 100 U/min und höchstvorzugsweise zwischen 10 und 60 U/min gedreht werden. Was die Andrückzeit anbelangt, wurde festgestellt, daß es vorteilhaft ist, wenn das Andrückorgan über einen Zeitraum zwischen einigen Sekunden und einigen Minuten, vorzugsweise zwischen 10 s und 2 min, gegen die Rohrwand des Gehäuserohrs gedrückt wird. Nicht nur der Anpreßdruck und die Erwärmungstemperatur, sondern auch die Anpreßzeit und die Rotationsgeschwindigkeit sind exakt einstellbar und folglich hochgradig reproduzierbar.

Denkbar ist es, daß die Aufrauhung des Innenkörpers durch chemische Behandlung oder durch Bestrahlung mit einem körnigen, abrasiven Medium geschieht. Bevorzugt wird der Innenkörper hingegen in einem Schleifvorgang aufgerauht. Die erzielten Schleifergebnisse sind mit einfachen Mitteln meßbar, beispielsweise mit elektrischen Tastern. Sie sind leicht reproduzierbar. Zudem ist der apparative Aufwand, den das Schleifen erfordert, gering.

Um ein verunreinigungsfreies Diaphragma zu erhalten, sollten der zuvor aufgerauhte Innenkörper und gewünschtenfalls auch das Gehäuserohr vor ihrer gegenseitigen Verbindung gereinigt werden. Hierzu kann beispielsweise ein lonentauscherwasser verwendet werden. Einer Naßreinigung kann sich eine aktive Trocknung anschließen, um die Wartezeit vor der Weiterverarbeitung zu verkürzen.

Eine gleichmäßige Erwärmung des Gehäuserohrs in Umfangsrichtung ist dadurch möglich, daß das Gehäuserohr zu seiner Erwärmung an einer stationär gehaltenen Wärmequelle vorbei um seine Rohrachse gedreht wird. Der Innenkörper kann bei der Erwärmung des Gehäuserohrs bereits in dieses eingesteckt und relativ zu dem Gehäuserohr unverdrehbar fixiert sein. Durch geeignete Lokalisierung und Ausgestaltung der verwendeten Wärmequelle läßt sich erreichen, daß der Innenkörper, sofern dies erwünscht ist, von der Wärmestrahlung der Wärmequelle nur wenig oder gar nicht getroffen wird. Denkbar ist es beispielsweise, die Wärmequelle derart anzuordnen, daß die von ihr erzeugte Wärmestrahlung das Gehäuserohr annähernd tangential streift. Als Wärmequelle kann eine offene Flamme verwendet werden. Es sind aber auch aufwendigere Heizeinrichtungen vorstellbar, insbesondere auch solche, deren Temperatur regelbar ist. Beispielhaft seien elektrische Heizgeräte oder Infrarotstrahler genannt.

Grundsätzlich ist es möglich, daß das Gehäuserohr zunächst mittels einer Wärmequelle erwärmt und seine Rohrwand anschließend nach Wegnahme der Wärmequelle auf den Innenkörper aufgedrückt wird. Dies kann etwa dann der Fall sein, wenn der Andrückvorgang relativ kurz dauert oder die Erwärmungstempe-ratur relativ hoch gewählt wurde, so daß das Material des Gehäuserohrs nicht frühzeitig erkaltet, bevor der Andrückvorgang beendet ist. Alternativ ist es denkbar, daß bereits während wenigstens eines Teils der Erwärmungsphase des Gehäuserohrs dessen Rohrwand zum Innenkörper hin gedrückt wird. Insbesondere kann der gesamte Andrückvorgang vollständig während der Erwärmungsphase stattfinden. Als Erwärmungsphase wird dabei diejenige Zeit angesehen, während der das Gehäuserohr der Wärmeeinwirkung der verwendeten Wärmequelle ausgesetzt ist.

Die Erfindung wird im folgenden anhand der beigefügten Zeichnungen näher erläutert. Es stellen dar:
- Fig. 1: eine Einstabmeßkette als Ausführungsbeispiel der erfindungsgemäßen Elektrodenanordnung und
- Fig. 2: eine Phase der Herstellung der Einstabmeßkette der Fig. 1.

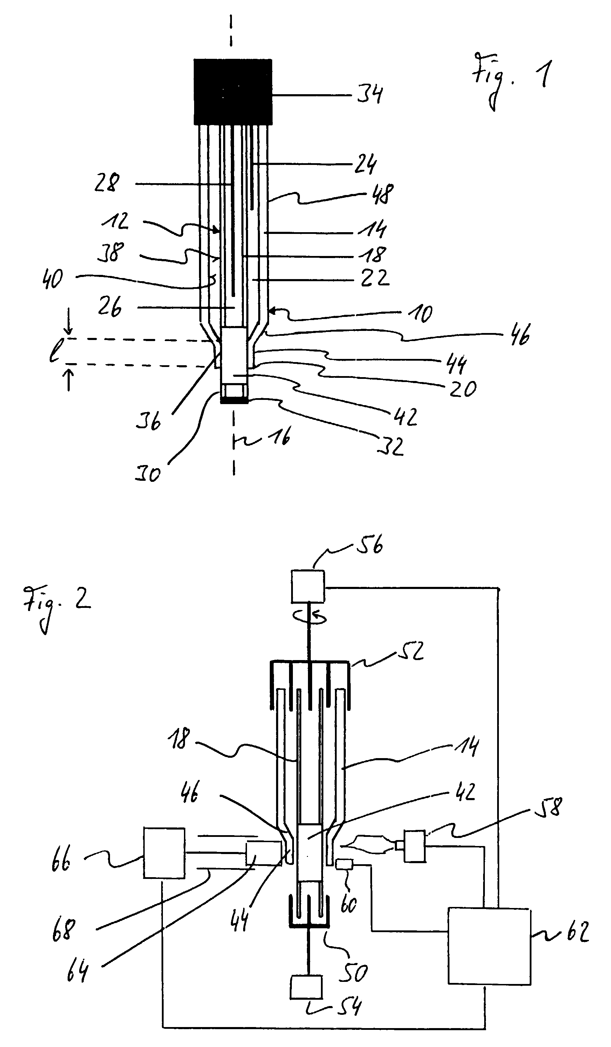

Die in Fig. 1 gezeigte Einstabmeßkette kann beispielsweise für Messungen des pH-Wertes eingesetzt werden. Sie ist aus einer Referenzelektrode 10 und einer Meßelektrode 12 aufgebaut. Die Referenzelektrode 10 umfaßt ein als Referenzelektrodengehäuse dienendes äußeres Rohr 14, das bevorzugt aus Glas gefertigt ist, wenngleich andere Materialien, insbesondere ein Kunststoffmaterial, nicht ausgeschlossen sind. Konzentrisch zur Rohrachse 16 ist ein inneres Rohr 18 von einem anfangs offenen Rohrende 20 des Außenrohrs 14 her axial in das Außenrohr 14 eingesteckt. Dieses Innenrohr 18 dient als Elektrodengehäuse der Meßelektrode 12 und ist bevorzugt ebenfalls aus Glas gefertigt, wenngleich genauso wie beim Außenrohr 14 wiederum andere Materialien denkbar sind. Insbesondere ist das Innenrohr 18 aus der gleichen Glaszusammensetzung wie das Außenrohr 14 gefertigt. Der Ringraum radial zwischen dem Innenrohr 18 und dem Außenrohr 14 dient als Aufnahmekammer 22 für einen Referenzelektrolyten, der beispielsweise eine 3-molare Kaliumchloridlösung ist. In den Referenzelektrolyten ist ein Ableitelement 24 eingetaucht, das als beschichteter Draht oder als Patrone ausgebildet sein kann. Das Ableitelement 24 kann etwa ein Silberdraht sein, der mit Silberchlorid beschichtet ist.

Der Innenraum des Innenrohrs 18 bildet eine weitere Aufnahmekammer 26, in der eine Pufferlösung enthalten ist, die beispielsweise wiederum eine Kaliumchloridlösung sein kann. Dieser Puffer übernimmt zusammen mit einem darin eingetauchten weiteren Ableitelemenet 28 die Potentialableitung des an der Meßelektrode 12 entstehenden Meßpotentials. Das Ableitelement 28 kann wiederum beispielsweise ein mit Silberchlorid beschichteter Silberdraht sein. Bevorzugt ist die Meßeleketrode 12 als Glaselektrode ausgeführt, die aus einem doppelten Zweiphasensystem mit Glas als gemeinsamer Phase besteht. Hierzu ist ein axial aus dem Außenrohr herausreichendes Rohrende 30 des Innenrohrs 18 durch eine aufgeschmolzene Glasmembran 32 verschlossen, die im Fall einer pH-Meßapplikation als pH-selektive Glasmembran dient.

Wenn die Einstabmeßkette mit ihrem in Fig. 1 unteren Teil in eine Testlösung eingetaucht wird, sind an den Ableitelementen 24, 28 Potentiale abgreifbar, anhand deren ein gewünschter Parameter der Testlösung, etwa der pH-Wert, ermittelt werden kann. Um die Potentiale der Ableitelemente 24, 28 abzugreifen, ist das in Fig. 1 obere Ende der Einstabmeßkette durch einen Elektrodensteckkopf 34 abgeschlossen, der mit den Ableitelementen 24, 28 verbunden ist. Alternativ ist es denkbar, statt des Steckkopfs 34 einzelne Kabel an die Ableitelemente 24, 28 anzuschließen.

Das Innenrohr 18 ist bei der dargestellten Ausführungsform auf seiner gesamten Länge durchmessergleich und besitzt einen kreisringförmigen Querschnitt. Selbstverständlich kann auch ein nichtdurchmesserkonstantes Innenrohr verwendet werden. Dies hängt von den konstruktiven Gegebenheiten ab. Es weist einen anfangs überall glatten Außenmantel 38 auf. Das Außenrohr 14 weist einen glatten Innenmantel 40 auf. Es ist zunächst ebenfalls auf seiner gesamten Länge durchmesserkonstant und besitzt einen Kreisringquerschnitt. Im Zuge der Verbindung von Außen- und Innenrohr 14, 18 erhält es im Bereich seines Endes 20 aber einen durchmesserreduzierten Wandbereich 44, der fest auf dem Innenrohr 18 sitzt. An diesen schließt sich ein durchmesserwachsender Wandabschnitt 46 an, der in einen durchmesserkonstanten Wandabschnitt 48 übergeht, welcher sich über die Restlänge des Außenrohrs 14 erstreckt. Der Durchmesser des Wandabschnitts 48 kann beispielsweise annähernd das Doppelte des Durchmessers des Innenrohrs 18 betragen.

Zwischen dem Außenrohr 14 und dem Innenrohr 18 ist ein Diaphragma 36 vorgesehen, das als Flüssigkeitsverbindung zwischen dem Referenzelektrolyten und der Testlösung dient und diese beiden Medien in elektrolytischen Kontakt miteinander bringt. Die Flüssigkeitsverbindung ist unmittelbar zwischen dem Außenmantel 38 des Innenrohrs 18 und dem Innenmantel 40 des Außenrohrs 14 gebildet. Genauer gesagt, ist sie zwischen einer aufgerauhten Ringzone 42 des Außenmantels 38 des Innenrohrs 18 und dem Wandabschnitt 44 des Außenrohrs 14 gebildet, der vollständig innerhalb der Aufrauhungszone 42 am Innenrohr 18 anliegt.

Durch die Rauhheit des Innenrohrs 18 im Bereich seiner Verbindung mit dem Außenrohr 14 liegen Außen- und Innenrohr nicht dicht aneinander, sondern bilden einen Mikroporensystem zwischen sich, das einen Stoffaustausch zwischen dem Referenzelektrolyten und der Testlösung ermöglicht. Die axiale Länge des so gebildeten Diaphragmas 36 (in Fig. 1 mit l bezeichnet) ist sehr einfach variierbar, indem der Wandabschnitt 44 kürzer oder länger gemacht wird. Man erkennt, daß die Aufrauhungszone 42 axial beidseits über die Verbindungszone zwischen Außen- und Innenrohr hinausragt, so daß ein standardisiertes Innenrohr für verschiedene Applikationen verwendet werden kann, die unterschiedlich lange Diaphragmen benötigen.

Bei der Herstellung der Einstabmeßkette wird die Zone 42 des Innenrohrs 18 bevorzugt in einer Schleifmaschine aufgerauht. Für die Oberflächenrauhheit des Innenrohrs 18 im Bereich der Aufrauhungszone 42 hat sich ein arithmetischer Mittelwert von 0,1 - 5 µm als geeignet erwiesen. Nach dem Schleifen wird das Innenrohr 18 naß gewaschen, etwa mit einem lonentauscherwasser, und anschließend getrocknet.

Das noch vollständig gerade Außenrohr 14 wird nun über das Innenrohr 18 gestülpt, so daß es im Bereich seines Rohrendes 20 axial mit der Aufrauhungszone 42 des Innenrohrs 18 überlappt. Die beiden Rohre 14, 18 werden in einer Drehbank konzentrisch und relativ zueinander unverdrehbar eingespannt. In Fig. 2 sind schematisch Klemmbacken 50, 52 dargestellt, mittels denen die Rohre 14, 18 relativ zueinander fixierbar sind. Die Klemmbacke 50 ist in einer Lagereinheit 54 drehbar gelagert. Die Klemmbacke 52 ist in einer Lager- und Antriebseinheit 56 drehbar gelagert und durch diese Lager- und Antriebseinheit 56 um eine zur Achse 16 des Außenrohrs 14 konzentrische Drehachse antreibbar.

Um das Außenrohr 14 mit dem Innenrohr 18 zu verbinden, wird das Außenrohr 14 zunächst im Bereich seines Rohrendes 20 erwärmt. Bei der Erwärmung kann das Außenrohr 14 alleine in der Drehbank eingespannt sein.

Um raschere Fertigungsabläufe zu ermöglichen, ist es jedoch auch schon während der Erwärmungsphase dem Innenrohr 18 übergestülpt. Zur Erwärmung dient eine stationär angeordnete Wärmequelle 58, beispielsweise ein Brenner mit einer offenen Flamme. Mittels dieser Wärmequelle 58 wird die Wand des Außenrohrs 14 annähernd auf Erweichungstemperatur erwärmt, bis sie mit vergleichsweise geringer Kraft verformt werden kann, jedoch nicht von alleine ihre Form verliert. Die Erwärmung erfolgt, während sich das Außenrohr 14 - ggf. zusammen mit dem Innenrohr 18 - mit einer konstanten Rotationsgeschwindigkeit dreht. Um den Erwärmungszustand des Außenrohrs 14 zu überwachen, ist ein Temperatursensor 60 vorgesehen, dessen Sensorsignale von einer zentralen Steuereinheit 62 ausgewertet werden können.

Sobald die Steuereinheit 62 feststellt, daß das Material des Außenrohrs 14 die gewünschte Temperatur erreicht hat, wird der Andrückvorgang eingeleitet, bei dem der Wandabschnitt 44 des Außenrohrs 14 auf das Innenrohr 18 aufgedrückt wird. Sofern nicht bereits geschehen, wird das Innenrohr 18 in das Außenrohr 14 eingesteckt und in der Drehbank eingespannt. Beide Rohre 14, 18 werden gemeinsam in Drehung versetzt. Ein stationär angeordnetes, also nicht mit den Rohren 14, 18 mitdrehendes Andrückorgan 64 wird dann von radial außen her gegen die erweichte Wand des Außenrohrs 14 gedrückt. Das Andrückorgan 64 besteht beispielsweise aus Kohle, damit es leichtgängig am Außenmantel des rotierenden Außenrohrs 14 entlanggleiten kann.

Das Andrückorgan 64 kann beispielsweise mittels einer Druckfeder gegen das Außenrohr 14 gedrückt werden. Denkbar ist auch, ein steuerbares Stellglied 66 vorzusehen, das an die Steuereinheit 62 angeschlossen ist und variable Andrückkräfte ermöglicht. Vorstellbar sind hydraulische, pneumatische oder elektromagnetische Stellglieder. Die aufgebrachte Kraft, mit der das Andrückorgan gegen das Außenrohr 14 drückt, kann bei einem Glasmaterial des Außenrohrs 14 beispielsweise im Bereich von einigen Newton liegen. Günstig ist es, wenn das Andrückorgan 64 in einer Führung 68 beweglich geführt ist. Infolge der Rotation der Rohre 14, 18 wird der Wandabschnitt 44 des Außenrohrs 14 ringsum mit gleichmäßiger Flächenpressung auf das Innenrohr 18 aufgedrückt. Dadurch wird eine gleichmäßige Qualität der Flüssigkeitsverbindung an jeder Umfangsstelle gewährleistet.

Während des Andrückvorgangs kann die Wärmequelle 58 zugeschaltet bleiben, um eine vorzeitige Abkühlung des Materials des Außenrohrs 14 zu vermeiden. Selbstverständlich kann die Wärmequelle 58 aber auch zu Beginn des Andrückvorgangs oder kurz danach abgeschaltet werden. Sämtliche Steuerfunktionen werden zweckmäßigerweise von der Steuereinheit 62 übernommen, die hierzu zusätzlich in Steuerverbindung mit der Lager- und Antriebseinheit 56 und der Wärmequelle 58 stehen kann.

Im Rahmen eines Experiments wurden mehrere gleiche Flüssigkeitsverbindungen a) bis f) hergestellt. Für das Innenrohr wurde jeweils ein Bleiglasrohr mit einem Durchmesser von 5,8 mm verwendet. Das Außenrohr, das ebenfalls ein Bleiglasrohr war, hatte jeweils einen Durchmesser von 12 mm im unverformten Zustand. Das Innenrohr wurde in einer etwa 20 mm langen Aufrauhungszone mit einer Schleifscheibe ringsum aufgerauht. Die dabei entstandene Rauhfläche hatte eine Oberflächenrauhheit mit einem arithmetischen Mittelwert Rₐ von 1,2 µm. Nachdem es mit einem lonentauscherwasser gewaschen wurde, wurde des Innenrohr bei 120°C getrocknet.

Anschließend wurde das Außenrohr über das Innenrohr gestülpt. Beide Rohre wurden in einer Drehbank eingespannt. Unter Temperaturkontrolle wurde das Außenrohr auf 670°C erhitzt. Seine Wand wurde mit einem Kohlestück auf das Innenrohr gedrückt. Die dabei aufgewendete Drückkraft betrug 5 N. Die Länge der entstandenen Flüssigkeitsverbindung betrug etwa 3 mm.

Nach Abschluß des Andrückvorgangs wurde der Ringraum zwischen Außen- und Innenrohr mit einer 3-molaren Kaliumchloridlösung gefüllt, in die ein mit Silberchlorid beschichteter Silberdraht eingetaucht wurde. Um den elektrolytischen Wechselstromwiderstand der Flüssigkeitsverbindung zu ermitteln, wurde die so gebildete Elektrodenanordnung in eine 3-molare Kaliumchloridlösung getaucht, in die außerdem eine äußere Platinelektrode eingetaucht wurde. Der Durchfluß wurde über die Gewichtsabnahme der Referenzelektrode nach einem Druckversuch über eine Stunde hinweg bei 1 bar und 25°C gemessen.

In der folgenden Tabelle sind die Meßergebnisse angegeben. Daraus geht hervor, daß die Erfindung die Herstellung einer Flüssigkeitsverbindung mit reproduzierbarem Widerstand und Durchfluß erlaubt.

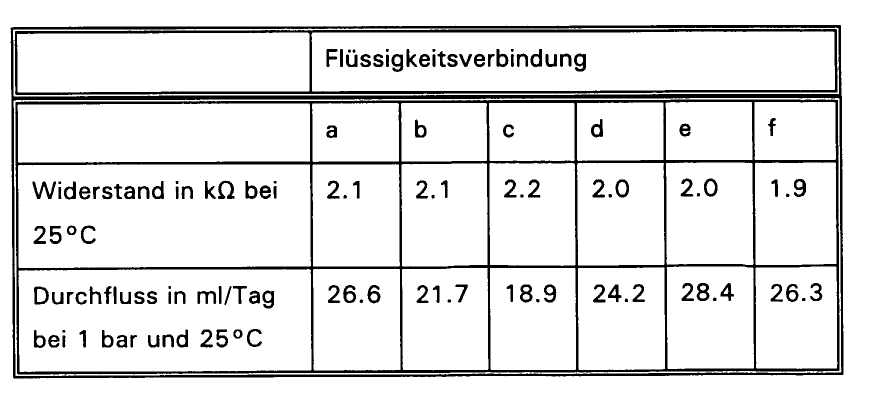

## Patentansprüche

1. Elektrochemische Elektrodenanordnung, umfassend
- ein Gehäuserohr (14) zur Aufnahme eines Elektrolyten,
- einen durch ein Rohrende (20) in das Gehäuserohr (14) eingesteckten, insbesondere ebenfalls rohrförmigen Innenkörper (18) und
- ein bezogen auf die Rohrachse (16) des Gehäuserohrs (14) radial zwischen dem Gehäuserohr (14) und dem Innenkörper (18) gebildetes Diaphragma (36), welches einen elektrolytischen Kontakt zwischen dem Elektrolyten und einem Außenmedium herstellt,
**dadurch gekennzeichnet**, daß der Innenkörper (18) mit seinem Außenmantel (38) in einem Verbindungsbereich ringsum im Festsitz am Innenmantel (40) des Gehäuserohrs (14) anliegt und daß zur Bildung des Diaphragmas (36) der Innenkörper (18) zumindest in dem Verbindungsbereich an seinem Außenmantel (38) aufgerauht ist.

2. Elektrodenanordnung nach Anspruch 1,
dadurch gekennzeichnet, daß der Innenkörper (18) in Richtung der Rohrachse (16) des Gehäuserohrs (14) in dem Verbindungsbereich und darüber hinaus zylindrisch ausgebildet ist und im wesentlichen zentrisch zur Rohrachse (16) in das Gehäuserohr (14) eingesteckt ist und daß die Rohrwand (14) des Gehäuserohrs (14) in dem Verbindungsbereich ringsum radial eingedrückt und auf den Innenkörper (18) aufgedrückt ist.

3. Elektrodenanordnung nach Anspruch 2,
dadurch gekennzeichnet, daß der Innenkörper (18) bis zu einem Rohrende (20) des Gehäuserohrs (14) reicht und das Gehäuserohr (14) an diesem Rohrende (20) auf den Innenkörper (18) aufgedrückt ist.

4. Elektrodenanordnung nach einem der Ansprüche 1 bis 3,
dadurch gekennzeichnet, daß der arithmetische Mittelwert der Oberflächenrauheit des Innenkörpers (18) im Bereich von dessen Aufrauhung (42) weniger als 15 µm, vorzugsweise weniger als 10 µm und höchstvorzugsweise höchstens 5 µm beträgt.

5. Elektrodenanordnung nach einem der Ansprüche 1 bis 4,
dadurch gekennzeichnet, daß der arithmetische Mittelwert der Oberflächenrauheit des Innenkörpers (18) im Bereich von dessen Aufrauhung (42) mehr als 0,01 µm, vorzugsweise mehr als 0,05 µm und höchstvorzugsweise wenigstens 0,1 µm beträgt.

6. Elektrodenanordnung nach einem der Ansprüche 1 bis 5,
dadurch gekennzeichnet, daß der Bereich der Aufrauhung (42) des Innenkörpers (18) in Richtung der Rohrachse (16) des Gehäuserohrs (14) länger als der Verbindungsbereich ist.

7. Elektrodenanordnung nach Anspruch 6,
dadurch gekennzeichnet, daß der Bereich der Aufrauhung (42) des Innenkörpers (18) in Richtung der Rohrachse (16) des Gehäuserohrs (14) beidseits über den Verbindungsbereich hinausreicht.

8. Elektrodenanordnung nach einem der Ansprüche 1 bis 7,
dadurch gekennzeichnet, daß der Innenkörper (18) an seinem Außenmantel (38) in einem Bereich (42) aufgerauht ist, welcher in Richtung der Rohrachse (16) des Gehäuserohrs (14) zwischen 1 und 30 mm, vorzugsweise zwischen 5 und 20 mm und höchstvorzugsweise zwischen 7 und 12 mm lang ist.

9. Elektrodenanordnung nach einem der Ansprüche 1 bis 8,
dadurch gekennzeichnet, daß der Verbindungsbereich in Richtung der Rohrachse (16) des Gehäuserohrs (14) zwischen 1 und 20 mm, vorzugsweise zwischen 1,5 und 15 mm und höchstvorzugsweise zwischen 2 und 6 mm lang ist.

10. Elektrodenanordnung nach einem der Ansprüche 1 bis 9,
dadurch gekennzeichnet, daß der Innenmantel (40) des Gehäuserohrs (14) im Verbindungsbereich glatt ist.

11. Elektrodenanordnung nach einem der Ansprüche 1 bis 10,
dadurch gekennzeichnet, daß der Innenkörper (18) oder/und das Gehäuserohr (14) aus einem Glasmaterial bestehen.

12. Elektrodenanordnung nach einem der Ansprüche 1 bis 11,
dadurch gekennzeichnet, daß der Innenkörper (18) und das Gehäuserohr (14) aus dem gleichen Werkstoff gefertigt sind.

13. Elektrodenanordnung nach einem der Ansprüche 1 bis 12,
dadurch gekennzeichnet, daß sie als Einstabmeßkette ausgeführt ist, deren Referenzelektrodengehäuse von dem Gehäuserohr (14) gebildet ist und deren Meßelektrodengehäuse von dem Innenkörper (18) gebildet ist.

14. Verfahren zur Herstellung der Elektrodenanordnung nach einem der Ansprüche 1 bis 13,
**dadurch gekennzeichnet**, daß zum Verbinden des Gehäuserohrs (14) mit dem Innenkörper (18) das Gehäuserohr (14) in dem Verbindungsbereich erwärmt wird und sodann seine erwärmte Rohrwand (44) in dem Verbindungsbereich ringsum auf den aufgerauhten Bereich (42) des in das Gehäuserohr (14) eingesteckten Innenkörpers (18) aufgedrückt wird.

15. Verfahren nach Anspruch 14,
dadurch gekennzeichnet, daß das Gehäuserohr (14) in dem Verbindungsbereich wenigstens annähernd auf Erweichungstemperatur erwärmt wird.

16. Verfahren nach Anspruch 14 oder 15,
dadurch gekennzeichnet, daß bei Ausführung des Gehäuserohrs (14) aus einem Glasmaterial, insbesondere Bleiglas, das Gehäuserohr (14) in dem Verbindungsbereich auf eine Temperatur zwischen 550 und 850 °C, vorzugsweise zwischen 630 und 720 °C und höchstvorzugsweise zwischen 650 und 700 °C erwärmt wird.

17. Verfahren nach einem der Ansprüche 14 bis 16,
dadurch gekennzeichnet, daß zum Aufdrücken des Gehäuserohrs (14) auf den eingesteckten Innenkörper (18) beide bezogen auf die Rohrachse (16) relativ zueinander unverdrehbar fixiert werden, sodann beide gemeinsam um die Rohrachse (16) gedreht werden und dabei ein stationär gehaltenes Andrückorgan (64) von radial außen gegen die erwärmte Rohrwand (44) des rotierenden Gehäuserohrs (14) gedrückt wird.

18. Verfahren nach Anspruch 17,
dadurch gekennzeichnet, daß ein Andrückorgan (64) aus Kohle oder Graphit verwendet wird.

19. Verfahren nach Anspruch 17 oder 18,
dadurch gekennzeichnet, daß mit einer Kraft zwischen 0,5 und 50 N, vorzugsweise zwischen 0,5 und 20 N und höchstvorzugsweise zwischen 1 und 10 N auf die Rohrwand (44) des Gehäuserohrs (14) gedrückt wird.

20. Verfahren nach einem der Ansprüche 17 bis 19,
dadurch gekennzeichnet, daß das Gehäuserohr (14) und der Innenkörper (18) mit einer Rotationsgeschwindigkeit zwischen 1 und 200 U/min, vorzugsweise zwischen 5 und 100 U/min und höchstvorzugsweise zwischen 10 und 60 U/min gedreht werden.

21. Verfahren nach einem der Ansprüche 17 bis 20,
dadurch gekennzeichnet, daß das Andrückorgan (64) über einen Zeitraum zwischen einigen Sekunden und einigen Minuten, vorzugsweise zwischen 10 s und 2 min, gegen die Rohrwand (44) des Gehäuserohrs (18) gedrückt wird.

22. Verfahren nach einem der Ansprüche 14 bis 21,
dadurch gekennzeichnet, daß der Innenkörper (18) in einem Schleifvorgang aufgerauht wird.

23. Verfahren nach einem der Ansprüche 14 bis 22,
dadurch gekennzeichnet, daß der aufgerauhte Innenkörper (18) und gewünschtenfalls das Gehäuserohr (14) vor ihrer gegenseitigen Verbindung gereinigt und gewünschtenfalls anschließend getrocknet werden.

24. Verfahren nach einem der Ansprüche 14 bis 23,
dadurch gekennzeichnet, daß das Gehäuserohr (14) zu seiner Erwärmung an einer stationär gehaltenen Wärmequelle (58) vorbei um seine Rohrachse (16) gedreht wird.

25. Verfahren nach Anspruch 24,
dadurch gekennzeichnet, daß der Innenkörper (18) bei der Erwärmung des Gehäuserohrs (14) in dieses eingesteckt und relativ zu dem Gehäuserohr (14) unverdrehbar fixiert ist.

26. Verfahren nach einem der Ansprüche 14 bis 25,
dadurch gekennzeichnet, daß das Gehäuserohr (14) zunächst mittels einer Wärmequelle (58) erwärmt und seine Rohrwand (44) anschließend nach Wegnahme der Wärmequelle (58) auf den Innenkörper (18) aufgedrückt wird.

27. Verfahren nach einem der Ansprüche 14 bis 25,
dadurch gekennzeichnet, daß bereits während wenigstens eines Teils der Erwärmungsphase des Gehäuserohrs (14) dessen Rohrwand (44) zum Innenkörper (18) hin gedrückt wird.
